# DEMANDE DE BREVET EUROPEEN

(11) **EP 0 558 368 A1**
(43) Date de publication de la demande: **01.09.1993**
(21) Numéro de dépôt: 93400326.0
(22) Date de dépôt: 09.02.1993
(51) Int. Cl.: G01V 8/10

(54) **Détection de la présence d'un objet sur une surface de réception d'un convoyeur**

(30) Priorité: 25.02.1992 FR 9202545
(71) Demandeur: VENS, S.A., F-59700 Marcq en Baroeul (FR)
(72) Inventeur: Guinamard, Jean, F-59650 Villeneuve d'Ascq (FR)
(74) Mandataire: Ecrepont, Robert

(57) **Abrégé**

L'invention se rapporte à un procédé de détection de la présence d'un objet sur une surface prédéterminée de convoyeur.

Il est caractérisé en ce que
- on définit, dans une zone de passage des surfaces de réception une pluralité de surfaces prédéterminées à surveiller,
- on détecte l'arrivée d'un surface de réception,
- on initialise le processus,
- au niveau de chaque surface prédéterminée, on surveille la lumière réfléchie,
- on détecte au moins l'une des brusque variations de lumière due au passage, au niveau de chaque surface surveillée, d'une zone de couleur contrastant par rapport à celle de la surface de réception,
- on compte le nombre de brusques variations détectées au même instant et on mémorise le nombre de variations,
- on passe à un nouveau moyen de mémorisation et ainsi de suite on continue la surveillance de la lumière réfléchie tant que la fin de la surface de réception n'est pas détectée, on continue

. lorsqu'on détecte la fin de la surface de réception, on effectue la somme des résultats de comptage et on compare la dite somme avec une valeur prédéterminée.

## Description

L'invention se rapporte à un procédé de détection de la présence d'un objet sur un surface de réception d'un convoyeur.

Elle se rapporte également aux moyens en vue de la mise en oeuvre du procédé ainsi qu'aux convoyeurs pourvus des dits moyens.

Classiquement, dans les services de constitution de lots d'objets tels des colis, il est habituel de faire appel à un convoyeur constitué notamment par une pluralité de surfaces prédéfinies dites de réception circulant en boucle fermée à l'aide duquel on peut constituer les divers colis qui seront ensuite par exemple expédiés.

Par exemple, ces surfaces sont des plateaux distincts ou des tronçons matérialisés d'une bande continue.

Pour cela, dans son cheminement, chaque surface de réception passe devant un poste de chargement et devant au moins un poste de déchargement où est disposé un réceptacle qui, lorsqu'il sera pourvu de ses objets, constituera un colis.

Au poste de chargement, un individu est chargé de déposer sur chaque surface de réception qui passe devant lui un objet.

Compte tenu des cadences imposées, la vitesse des surfaces de réception est telle qu'il n'est pas toujours possible de déposer un objet sur chacune d'elles.

Comme tous ces surfaces de réception ne transportent donc pas nécessairement un objet et qu'il y a une pluralité de poste de déchargement, il est nécessaire qu'au moins en un point déterminé du trajet de celles-ci, on vérifie la présence d'un objet sur la surface de réception de manière à ne commander le déchargement de la surface de réception à un poste de déchargement que si celle-ci transporte un objet.

Il est connu d'équiper le fond d'une surface de réception d'un élément sensible tel un réflecteur pour une cellule photo-électrique qui, lorsqu'il est recouvert par un objet, ne réfléchit plus la lumière vers une cellule photo-électrique ce qui constitue un signal qui indique la présence de l'objet.

Néanmoins, ces éléments réflecteurs sont de petite taille par rapport à la surface du fond de la surface de réception et, de ce fait, lorsque les objets sont de petite taille, la probabilité que celui-ci recouvre l'élément réflecteur est diminuée.

Le fonctionnement d'un tel dispositif devient donc aléatoire.

Cela implique également que chaque surface de réception comporte un élément réflecteur ce qui augmente le coût de l'installation.

On connaît également une installation dans laquelle le fond de chaque surface de réception est pourvu d'une matrice de points de couleur constratée par rapport à la couleur du fond.

Cette matrice de point est constituée d'une pluralité de rangées, lesquelles sont orientées perpendiculairement au sens de déplacement des surfaces de réception.

A partir de cette matrice de points, on peut créer une multiplicité de code, ceux-ci résultant de l'effacement d'au moins un point de la matrice.

Au moins en un emplacement du cheminement des surfaces de réception, on enregistre la lumière réfléchie par l'ensemble du fond de la surface de réception et on réalise une interprétation de cette lumière réfléchie.

Dans ce procédé connu, on détermine également la position des points non masqués de la matrice.

Les combinaisons des positions des points correspondant à un code, on recherche le code correspondant ; par exemple, le code signifie qu'un objet est placé sur le bord latéral de la surface de réception.

Dans certains cas, l'interprétation de l'image peut être faussée notamment lorsque la surface de réception est souillée par des tâches.

Il est également difficile d'ajuster la sensibilité de la détection.

Un des résultats que l'invention vise à obtenir est un procédé qui remèdie aux problèmes précités.

A cet effet, l'invention a pour objet un procédé de détection de la présence d'un objet sur une surface de réception de convoyeur, lequel est constitué d'une pluralité de surfaces de réception circulant en boucle fermée dont chaque surface de réception est pourvue de zones de couleur constrastée par rapport à la couleur de la surface de réception, les dites zones étant agencées sensiblement en rangées sensiblement perpendiculaires au sens de déplacement de la surface de réception et dans lequel procédé, en un point prédéterminé du cheminement, on enregistre la lumière réfléchie par la surface de réception et on réalise un interprétation de cette lumière réfléchie.

Ce procédé est notamment caractérisé en ce que, préalablement, à l'opération de surveillance :
- on prévoit au moins autant de moyens de mémorisation du résultat de comptages que de rangées constituée sur la surface de réception,
- on définit, dans une zone de passage des surfaces de réception, parallèlement aux rangées, une pluralité de surfaces prédéterminées à surveiller et lors de l'opération de surveillance :
   . on détecte l'arrivée d'une surface de réception,
   . on initialise le processus,
   . au niveau de chaque surface prédéterminée, avec une fréquence dite de surveillance prédéterminée, on surveille la lumière réfléchie,
   . on détecte au moins l'une des brusques variations de lumière due au passage, au niveau de chaque surface surveillée, d'une zone de couleur contrastée par rapport à celle de la surface de réception,
   . on compte le nombre de brusques variations détectées au même instant et on mémorise le nombre de variations,
   . on passe à un nouveau moyen de mémorisation et ainsi de suite on continue la surveillance de la lumière réfléchie tant que la fin de la surface de réception n'est pas détectée, on continue
   . lorsqu'on détecte la fin de la surface de réception, on effectue la somme des résultats de comptage et on compare la dite somme avec une valeur prédéterminée qui est fonction du nombre de zones qui doivent rester visibles pour une taille prédéfinie d'objets et, en fonction du résultat de cette comparaison, on considère s'il y a présence d'un objet sur le surface de réception.

L'invention sera bien comprise à l'aide de la description ci-aprés faite à titre d'exemple non limitatif en regard du dessin ci-annexé qui représente schématiquement :

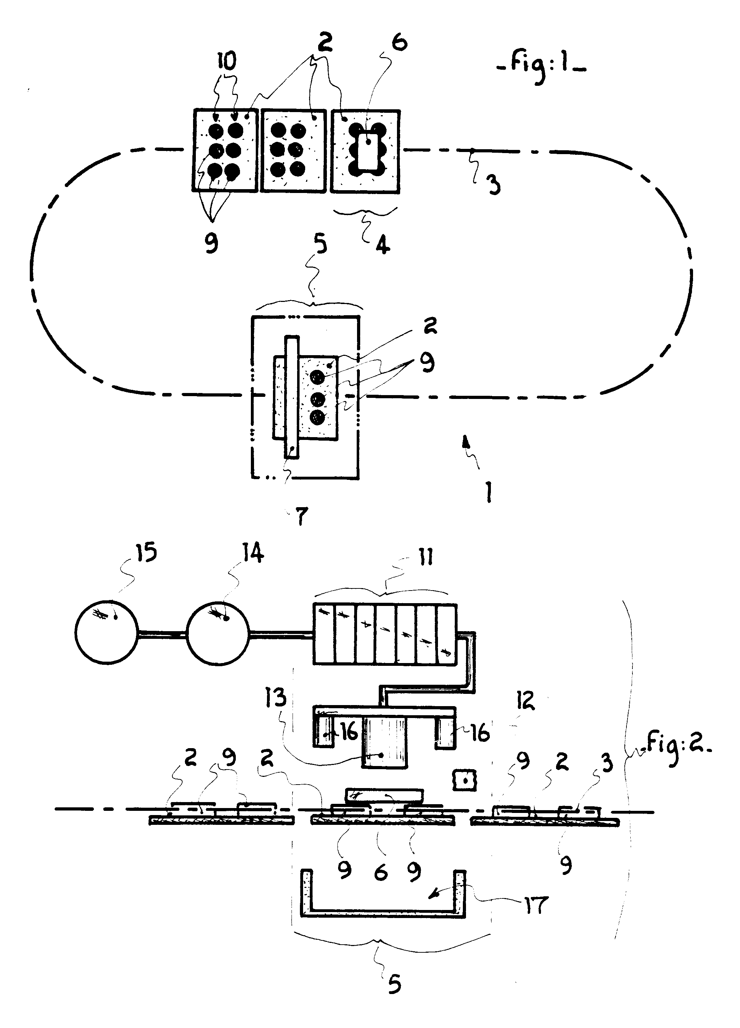

- figure 1 : un convoyeur vu de dessus,
- figure 2 : un détail du convoyeur vu en coupe et à plus grande échelle.

En se reportant au dessin, on voit que le convoyeur 1 est constitué d'une pluralité de surfaces de réception 2 qui circulent en boucle fermée suivant un trajet 3 prédéfini.

Ces surfaces de réception peuvent être constituées par le fond d'un plateau mais également par des zones matérialisées sur un tapis sans fin.

Dans son cheminement, chaque surface de réception 2 passe devant un poste de chargement 4 puis devant au moins un poste de déchargement 5.

Au poste de chargement 4, un individu ou une machine est chargé de placer un objet 6 sur chacune des surfaces de réception.

Compte tenu de divers facteurs, il est matériellement impossible de garantir la dépose effective d'un objet sur chacune des surfaces de réception.

C'est pourquoi dans au moins une zone 7 prédéterminée du cheminement d'une surface de réception, on vérifie la présence d'un objet sur la surface de réception lors de son passage au droit de la zone précitée.

Pour cela, la surface de réception 2 est pourvue de zones 9 de couleur contrastant par rapport à la couleur du reste de la surface de réception.

Ces zones 9 sont agencées sensiblement en rangées 10, lesquelles sont orientées perpendiculairement à la direction de déplacement D de chaque surface de réception.

Par exemple, il peut s'agir d'une matrice de points telle que représentée mais également un damier ou une succession de lignes continues.

Dans une zone prédéterminée du cheminement, par exemple, juste avant un poste de déchargement 5, on enregistre la lumière réfléchie par la surface de réception et on réalise une interprétation de cette lumière réfléchie.

Préalablement, à l'opération de surveillance :
- on prévoit au moins autant de moyens de mémorisation de résultat de comptages que de rangées constituées sur la surface de réception,
- on définit, dans une zone de passage des surfaces de réception, parallèlement aux rangées, une pluralité de surfaces prédéterminées à surveiller et lors de l'opération de surveillance :
   . on détecte l'arrivée d'un surface de réception,
   . on initialise le processus,
   . au niveau de chaque surface prédéterminée, avec une fréquence dite de surveillance prédéterminée, on surveille la lumière réfléchie,
   . on détecte au moins l'une des brusques variations de lumière due au passage, au niveau de chaque surface surveillée, d'une zone de couleur contrastée par rapport à celle de la surface de réception,
   . on compte le nombre de brusques variations détectées au même instant et on mémorise le nombre de variations,
   . on passe à un nouveau moyen de mémorisation et ainsi de suite on continue la surveillance de la lumière réfléchie tant que la fin de la surface de réception n'est pas détectée, on continue
   . lorsqu'on détecte la fin de la surface de réception, on effectue la somme des résultats de comptage et on compare la dite somme avec la valeur prédéterminée qui est fonction du nombre de zones qui doivent rester visibles pour une taille prédéfinie d'objets et, en fonction du résultat de cette comparaison, on considère s'il y a présence d'un objet sur le surface de réception.

De préférence, aprés avoir détecté l'arrivée d'une surface de réception, on vérifie que la fin de la surface précédente a été détectée ; en cas contraire, on stoppe le processus.

Par exemple, on peut décréter que, s'il y a moins de dix zones contrastées occultées, ceci n'a pas de signification.

Lors du passage de chaque zone contrastée, se produisent deux variations bruques inverses de lumière mais, de préférence, on détecte uniquement l'une des deux variations brusques de lumière due au passage d'une zone contrastée dans la surface surveillée.

On adapte la fréquence de surveillance à la vitesse de la surface de réception et donc à la fréquence de passage des rangées.

Selon l'invention :
- on mesure le temps qui s'écoule entre la fin d'une surface de réception et le passage de la surface suivante,
- en fonction de la distance prédéterminée qu'il y a entre deux surfaces de réception, on détermine la vitesse de passage de la dite surface,
- on calcule la durée théorique de passage d'une surface de réception,
- aprés avoir détecté l'arrivée d'une surface de réception, on surveille le passage de la fin de la dite surface de réception et
- si la durée théorique de passage de la surface de réception est écoulée sans avoir décelé le passage de la fin de la surface de réception, on stoppe le processus de surveillance.

Avantageusement, on éclaire les surfaces de réception avec une source de lumière émettant dans une bande de fréquences différente de celle de la lumière visible et on mesure la lumière réfléchie dans la bande précitée.

Selon l'invention, on choisit l'angle d'incidence de la lumière de manière que la lumière réfléchie soit sensiblement perpendiculaire à la surface de réception.

Notamment, dans le cas de points ou de zones distincts tels des carrés, on détermine chaque surface à surveiller de manière que sa géométrie et sa taille soient sensiblement équivalentes à celles d'une zone contrastrée c'est à dire que chaque surface surveillée vue périodiquement est sensiblement égale à la surface d'une zone contrastée.

Pour la mise en oeuvre du procédé, selon l'invention, l'installation comprend :
- un moyen 12 pour détecter l'arrivée d'une surface de réception,
- un moyen pour détecter la fin d'une surface de réception,
- un moyen de réinitialisation du processus,
- des moyens 13 pour surveiller cycliquement la lumière réfléchie par une pluralité de surfaces prédéterminées,
- des moyens 11 pour compter et mémoriser à chaque passage d'une rangée le nombre de brusques variations détectées,
- un moyen 14 pour sommer le nombre de brusques variations mémorisées lors du passage de toutes les rangées et
- des moyens 15 pour comparer avec une valeur prédéterminée la somme des variations détectées et à partir de cette comparaison considérer s'il y a présence d'objets sur le surface de réception.

Selon l'invention, l'installation comprend des moyens 16 pour éclairer la surface de réception analysé avec une lumière dont la bande de fréquences est différente de celle de la lumière visible.

Par exemple, il s'agit de lumière infra rouge.

Les moyens 13 pour surveiller les surfaces prédéterminées sont sensibles à la bande de fréquence de la lumière utilisée.

Selon l'invention, les moyens pour éclairer les surfaces de réception et les moyens pour surveiller les surfaces prédéterminées sont disposés de telle manière que la lumière incidente soit réfléchie par la surface de réception sensiblement perpendiculairement à celle-ci et reçue sur la face photosensible des moyens de surveillance précitée sensiblement perpendiculairement à la dite face.

Les moyens pour surveiller une pluralité de surfaces prédéterminées consistent en une pluralité d'éléments photosensibles qui, disposés en au moins une rangée, sont placés au dessus du cheminement du convoyeur.

Bien que cela ne soit pas représenté, l'installation comprend évidemment au moins :
- un moyen moteur pour déplacer les surfaces de réception,
- un moyen pour provoquer le déchargement des surfaces de réception vers une zone de réception 17 et
- une chaîne pour l'entrainement des surfaces de réception lorsqu'il s'agit de plateaux.

Les moyens de détection de l'arrivée et/ou de la fin d'une surface de réception consistent en au moins une cellule photoélectrique.

Bien évidemment, la taille des zones contrastées est choisie pour être notablement inférieure à la taille des objets les plus petits à détecter avec le type de surfaces de réception.

## Revendications

1. Procédé de détection de la présence d'un objet sur une surface prédéterminée de convoyeur, lequel objet est constitué d'une pluralité de surfaces de réception circulant en boucle fermée dont la surface de réception est pourvue de zones de couleur constrastée par rapport à la couleur du fond, les dites zones étant agencées en rangées sensiblement perpendiculaires au sens de déplacement de la surface de réception et dans lequel procédé, en une zone prédéterminé du cheminement, on enregistre la lumière réfléchie par la surface de réception et on réalise une interprétation de cette lumière réfléchie,
ce procédé étant **CARACTERISE** en ce que, préalablement, à l'opération de surveillance :
- on prévoit au moins autant de moyens de mémorisation de résultat de comptages que de rangées constituées sur la surface de réception,
- on définit, dans une zone de passage des surfaces de réception, parallèlement aux rangées une pluralité de surfaces prédéterminées à surveiller et lors de l'opération de surveillance :
. on détecte l'arrivée d'un surface de réception,
. on initialise le processus,
. au niveau de chaque surface prédéterminée, avec une fréquence dite de surveillance prédéterminée, on surveille la lumière réfléchie,
. on détecte au moins l'une des brusques variations de lumière due au passage, au niveau de chaque surface surveillée, d'une zone de couleur contrastant par rapport à celle de la surface de réception,
. on compte le nombre de brusques variations détectées au même instant et on mémorise le nombre de variations,
. on passe à un nouveau moyen de mémorisation et ainsi de suite on continue la surveillance de la lumière réfléchie tant que la fin de la surface de réception n'est pas détectée, on continue
. lorsqu'on détecte la fin de la surface de réception, on effectue la somme des résultats de comptage et on compare la dite somme avec une valeur prédéterminée qui est fonction du nombre de zones qui doivent rester visibles pour une taille prédéfinie d'objets et, en fonction du résultat de cette comparaison, on considère s'il y a présence d'un objet sur le surface de réception.

2. Procédé selon la revendication 1 **caractérisé** en ce qu'on détecte uniquement l'une des deux variations brusques de lumière due au passage d'une zone contrastée dans la surface surveillée.

3. Procédé selon la revendication 1 ou 2 **caractérisé** en ce qu'on éclaire les surfaces de réception avec une source de lumière émettant dans une bande de fréquences différente de celle de la lumière visible et on mesure la lumière réfléchie dans la bande précitée.

4. Procédé selon la revendication 3 **caractérisé** en ce qu'on choisit l'angle d'incidente de la lumière de manière que la lumière réfléchie soit sensiblement perpendiculaire à la surface de réception.

5. Procédé selon l'une quelconque des revendications 1 à 4 **caractérisé** en ce qu'on détermine chaque surface à surveiller de manière que sa géométrie et sa taille soient sensiblement équivalentes à celles d'une zone contrastée.

6. Procédé selon l'une quelconque des revendications 1 à 5 **caractérisé** en ce qu'on adapte la fréquence de surveillance à la vitesse de la surface de réception et donc à la fréquence de passage de zones.

7. Moyens en vue de la mise en oeuvre du procédé selon la revendication 1 **caractérisés** en ce qu'ils consistent en :
- un moyen (12) pour détecter l'arrivée d'une surface de réception
- un moyen pour détecter la fin d'une surface de réception,
- un moyen de réinitialisation du processus,
- des moyens (13) pour surveiller cycliquement la lumière réfléchie par une pluralité de surfaces prédéterminées,
- des moyens (11) pour compter et mémoriser à chaque passage d'une rangée le nombre de brusques variations détectées,
- un moyen (14) pour sommer le nombre de brusques variations mémorisées lors du passage de toutes les rangées et
- des moyens (15) pour comparer avec une valeur prédéterminée la somme des variations détectées et à partir de cette comparaison considérer s'il y a présence d'objets sur le surface de réception.

8. Moyens selon la revendication 7 **caractérisés** en ce que, d'une part, les moyens pour éclairer la surface de réception analysé éclairent celle-ci dans une bande de fréquences différentes de celle de la lumière visible et, d'autre part, les moyens (13) pour surveiller les surfaces prédéterminées sont sensibles à la bande de fréquence de la lumière utilisée.

9. Moyens selon la revendication 8 **caractérisés** en ce que les moyens pour éclairer les surfaces de réception et les moyens pour surveiller les surfaces prédéterminées sont disposés de telle manière que la lumière soit réfléchie par la surface de réception sensiblement perpendiculairement à celle-ci et reçue sur la face photosensible des moyens de surveillance précitée sensiblement perpendiculairement à la dite face.

10. Installation **caractérisée** en ce qu'elle est pourvue de moyens selon l'une quelconque des revendications 7 à 9.
